# FASCICULE DE BREVET EUROPEEN

(11) **EP 1 320 467 B1**
(45) Date de publication et mention de la délivrance du brevet: **02.11.2006**
(21) Numéro de dépôt: 01978508.8
(22) Date de dépôt: 28.09.2001
(51) Int. Cl.: B60J 7/14

(54) **TOIT ESCAMOTABLE POUR VEHICULE ET VEHICULE NOTAMMENT DU TYPE PICK-UP EQUIPE D'UN TEL TOIT**
VERSENKBARES DACH FÜR EIN FAHRZEUG UND FAHRZEUG, INSBESONDERE VOM TYP PICK-UP, MIT EINEM SOLCHEN DACH
MOTOR VEHICLE RETRACTABLE ROOF AND IN PARTICULAR PICK-UP EQUIPPED WITH SAME

(30) Priorité: 28.09.2000 FR 0012367
(43) Date de publication de la demande: 25.06.2003
(73) Titulaire: Société Européenne de Brevets Automobiles - SEBA, 75011 Paris (FR)
(72) Inventeur: QUEVEAU, Gérard, F-79140 Le Pin (FR); GUILLEZ, Jean-Marc, F-79140 Cirieres (FR)
(74) Mandataire: Geismar, Thierry
(86) Numéro de dépôt international: PCT/FR2001/003019
(87) Numéro de publication internationale: WO 2002/026512

(56) Documents cités:
- FR-A- 2 778 610
- US-A- 5 209 544

## Description

La présente invention concerne un toit escamotable rigide pour tout type de véhicule.

L'invention vise en particulier, mais non limitativement, un véhicule du type pick-up équipé d'un toit escamotable, ce véhicule étant transformable, en berline, coupé deux ou quatre places et cabriolet deux ou quatre places.

On connaît de nombreux toits escamotables constitués d'éléments rigides permettant de transformer un véhicule du type coupé en un véhicule du type cabriolet.

On connaît du document FR-A-2 778 610, un toit escamotable pour véhicule selon le préambule de la revendication 1.

Un premier but de la présente invention est de créer une nouvelle réalisation d'un toit escamotable adaptable sur tout type de véhicule et occupant un espace minimal en position de rangement à l'intérieur du coffre arrière du véhicule.

Un autre but de l'invention est de créer un véhicule équipé du toit escamotable ci-dessus pouvant être transformé en plusieurs versions.

Suivant l'invention, le toit escamotable pour véhicule est caractérisé par les caractéristiques de la partie caractérisante de la revendication 1.

Suivant un autre aspect, l'invention concerne un véhicule équipé d'un toit escamotable conforme à l'invention, ce véhicule étant du type pick-up comprenant une cabine avant et une benne arrière, cette cabine comportant des sièges avant et une banquette arrière rabattable, le toit étant déplaçable entre les positions suivantes :
- une première position dans laquelle les éléments arrière et avant recouvrent entièrement la cabine avant, celle-ci pouvant alors abriter des passagers à l'avant et à l'arrière,
- une deuxième position dans laquelle les éléments arrière et avant sont rangés dans la benne arrière, la cabine avant étant alors totalement découverte,
- une troisième position dans laquelle la banquette arrière est rabattue vers l'avant dans le prolongement du plancher de la benne arrière pour allonger celle-ci, et l'élément avant recouvre la partie avant de la cabine, l'élément arrière est rangé dans la benne arrière, la lunette de l'élément arrière est rabattue vers le bas et vers les sièges avant pour fermer l'arrière de la cabine.

D'autres particularités et avantages de l'invention apparaîtront encore dans la description ci-après.

Aux dessins annexés, donnés à titre d'exemples non limitatifs :
- la figure 1 est une vue en coupe longitudinale partielle du véhicule selon l'invention, équipé d'un toit escamotable,
- la figure 2 est une vue schématique du toit escamotable selon l'invention dans ses deux positions extrêmes,
- la figure 3 est une vue analogue à la figure 2, montrant une première version des moyens de déplacement de la lunette de l'élément arrière du toit escamotable,
- la figure 4 est une vue analogue à la figure 3 montrant une deuxième version des moyens de déplacement de la lunette,
- la figure 5 est une vue analogue aux figures 3 et 4 montrant une troisième version des moyens de déplacement de la lunette,
- la figure 6 est une vue de détail suivant la flèche F de la figure 5.
- la figure 7 est une vue de côté de la lunette arrière montrant son dispositif de verrouillage,
- la figure 8 est une vue en plan partielle de la lunette arrière, montrant également son dispositif de verrouillage.

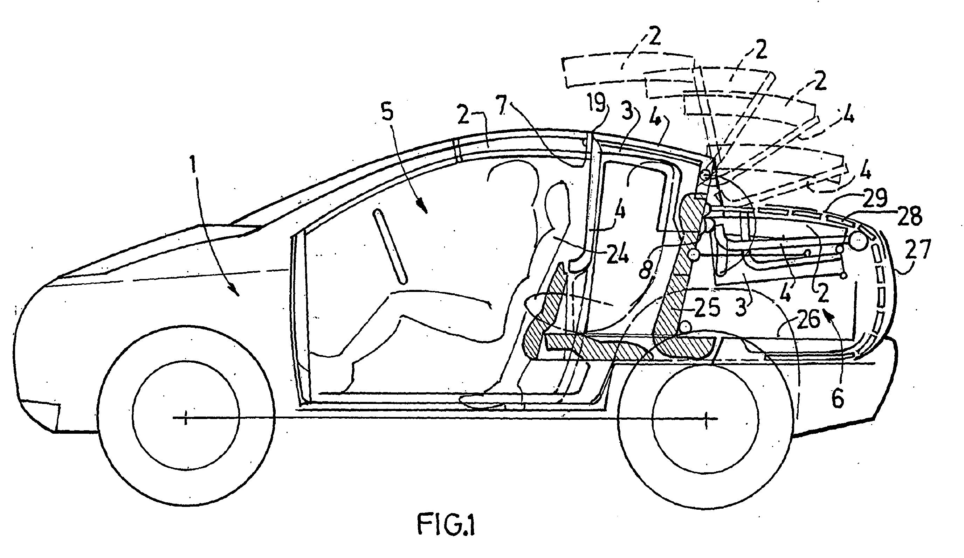

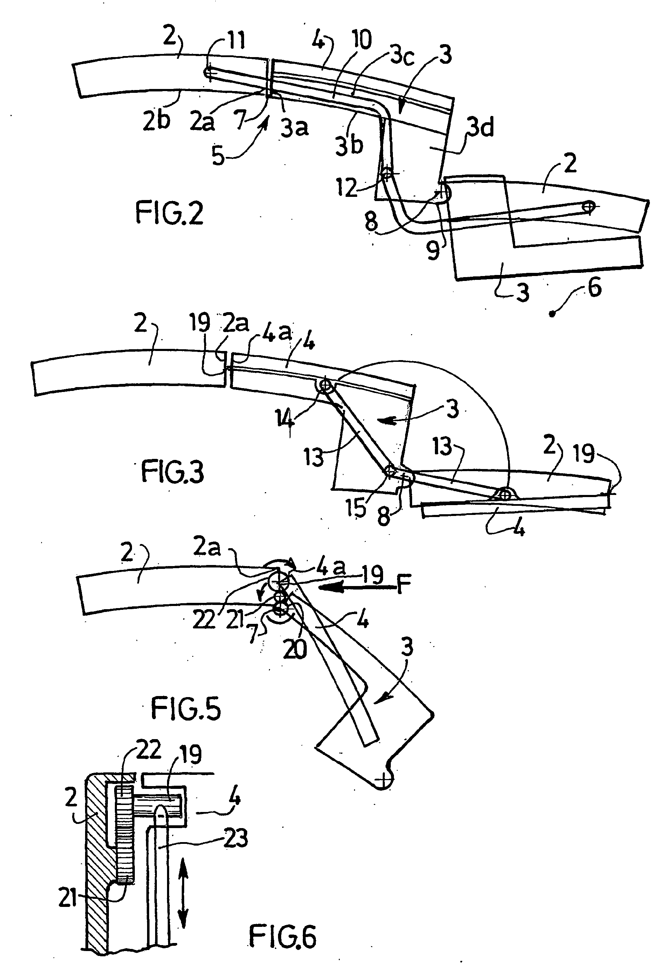

Dans la réalisation représentée sur les figures 1 et 2, le toit escamotable du véhicule 1 comprend un élément de toit avant rigide (2) et un élément de toit arrière rigide (3) portant une lunette arrière (4).

Ces éléments avant et arrière (2, 3) sont déplaçables entre une position dans laquelle ces éléments (2,3) s'étendent au dessus de l'habitacle (5) du véhicule (1) et une position dans laquelle ces éléments (2, 3) sont repliés l'un sur l'autre dans le coffre arrière (6) du véhicule.

Conformément à l'invention, l'élément avant (2) est fixé de façon articulée à l'élément arrière (3) suivant un premier axe (7) (voir figure 2) compris entre les bords adjacents (2a, 3a) des deux éléments (2, 3) et situé sensiblement dans le prolongement de leur surface inférieure (2b, 3b).

L'élément arrière (3) est fixé de façon articulée à la carrosserie suivant un deuxième axe (8) proche du bord arrière inférieur (9) de cet élément arrière (3).

Le déplacement des deux éléments de toit (2, 3) entre les deux positions précitées est commandé par un bras pivotant (10) dont l'extrémité avant est fixée de façon articulée à l'élément avant (2) suivant un troisième axe (11) situé en avant du premier axe (7).
L'extrémité arrière du bras de commande (10) est fixée de façon articulée à la carrosserie suivant un quatrième axe (12) situé en avant du deuxième axe (8).

Les quatre axes précités (7, 11, 12, 8) définissent un quadrilatère déformable.

Le pivotement du bras (10) est commandé par des moyens tels qu'un vérin ou un moteur, permettant à ce bras (10) de basculer vers l'arrière suivant un angle proche de 180°. Dans l'exemple représenté sur les figures 1 et 2, cet angle et de l'ordre de 165°.

Comme montré par les figures 1 et 2, en position de rangement dans le coffre arrière (6), l'élément avant (2) s'étend sensiblement horizontalement au-dessus de l'élément arrière (3).

Ce dernier est replié sous l'élément avant (2) par rotation suivant un angle proche de 180° autour du premier axe (7).

Dans l'exemple représenté, l'élément arrière (3) présente un profil latéral de forme coudée dont une partie (3c) est située dans le prolongement de l'élément avant (2) et l'autre partie (3d) s'étend vers le bas.

Le bras de commande (10) présente une forme coudée épousant sensiblement la forme coudée de l'élément arrière (3).

Comme montré par les figures 3, 4 et 5, la lunette arrière est associée à des moyens permettant de déplacer cette lunette (4) entre une position dans laquelle elle recouvre une partie de la surface extérieure de l'élément arrière (3) et une position rangée dans le coffre arrière (6) dans laquelle cette lunette (4) s'étend entre l'élément avant (2) et l'élément arrière (3).

Cette disposition permet de réduire l'encombrement du toit escamotable à l'intérieur du véhicule.

Dans la version de la figure 3, les moyens ci-dessus comprennent un levier pivotant (13) dont une extrémité est fixée de façon articulée à la lunette (4) suivant un axe (14) s'étendant sous cette lunette (4) et dont l'autre extrémité est montée pivotante sur le châssis suivant un axe (15) proche dudit deuxième axe (8).

La figure (3) montre le pivotement du levier (13) entre ses deux positions extrêmes.

D'autre part, le bord avant (4a) de la lunette (4) est articulé au bord arrière (2a) de l'élément avant (2) suivant un axe (19).

Dans la deuxième version représentée sur la figure (4), les moyens précités comprennent un levier pivotant (16) dont une extrémité est fixée de façon articulée à la lunette (4) suivant un axe (17) s'étendant sous cette lunette (4) et dont l'autre extrémité est montée pivotante suivant un axe (18) solidaire du bras pivotant (10).

Par ailleurs, le bord avant (4a) de la lunette (4) est articulé au bord arrière (2a) de l'élément avant (2) suivant un axe (19).

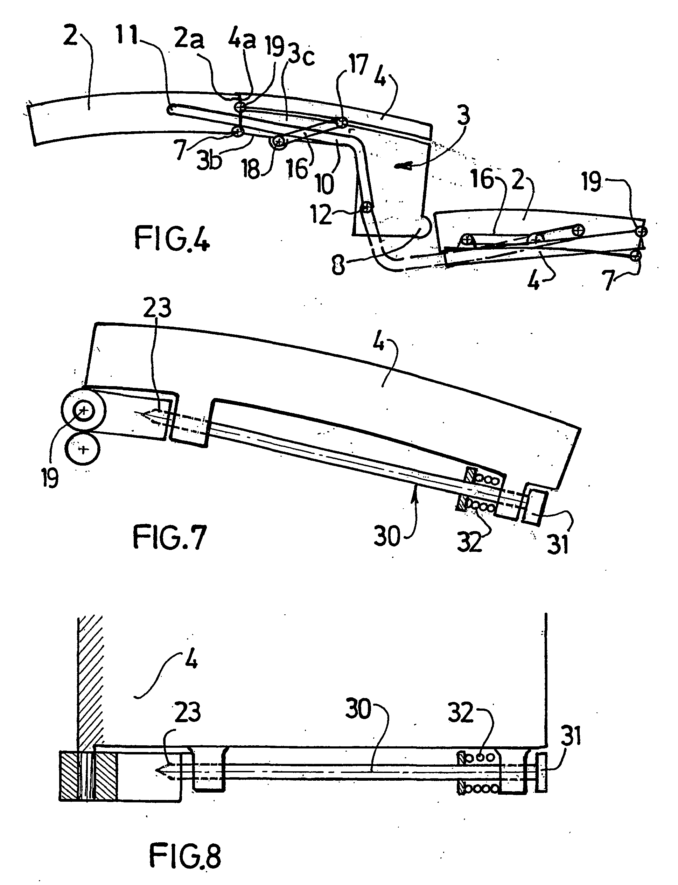

Dans la version selon la figure 5, le bord avant (4a) de la lunette (4) est articulé au bord arrière (2a) de l'élément avant (2) et l'axe d'articulation (7) de l'élément arrière (3) à l'élément avant (2) porte un pignon (20) engrené avec un pignon fou (21), lui-même engrené avec un pignon (22) solidaire de l'axe (19) d'articulation de la lunette (4) avec l'élément avant (2).

Par ailleurs, comme indiqué sur les figures 6, 7 et 8, la lunette (4) comporte un verrou (23) apte à verrouiller cette lunette (4) à son axe d'articulation (19) à l'élément avant (2), par l'intermédiaire d'un bras (30) dont l'extrémité opposée au verrou (23) porte une tirette (31). Le verrou (23) est maintenu en position de verrouillage grâce à un ressort (32).

Le toit escamotable que l'on vient de décrire, peut convenir à tout type de véhicule.

Dans l'exemple de la figure 1, le véhicule est du type pick-up et comprend une cabine avant (5) formant habitacle et une benne arrière (6) formant coffre.

La cabine (5) comporte des sièges avant (24) et une banquette arrière (25) rabattable.

Le toit selon l'invention constitué par les éléments avant (2) et arrière (3) décrits précédemment est déplaçable entre les positions suivantes :
- une première position dans laquelle les éléments arrière (3) et avant (2) recouvrent entièrement la cabine avant (5), celle-ci pouvant alors abriter des passagers à l'avant et à l'arrière,
- une deuxième position dans laquelle les éléments arrière (3) et avant (2) sont rangés dans la benne arrière (6), la cabine avant (5) étant alors totalement découverte,
- une troisième position dans laquelle la banquette arrière (25) est rabattue vers l'avant dans le prolongement du plancher (26) de la benne arrière (6) pour allonger celle-ci, et l'élément avant (2) du toit recouvre la partie avant de la cabine (5), l'élément arrière (3) est rangé dans la benne arrière (6), la lunette (4) de l'élément arrière (3) est rabattue vers le bas et vers les sièges avant (24) pour fermer l'arrière de la cabine (5).

La figure 1 montre d'autre part que la benne arrière (6) comporte un hayon arrière basculant (27) et un rideau (28) cache bagage monté coulissant à l'intérieur du hayon (27) et le long des bords supérieurs (29) de la benne.

De la description ci-dessus, il résulte que le pick-up que l'on vient de décrire, est un véhicule transformable multifonctionnel, présentant simultanément les avantages d'un pick-up du fait de la benne, d'une berline du fait des places avant et arrière et d'un coffre pouvant être fermé, d'un coupé deux places avec un toit rigide et d'un cabriolet deux ou quatre places.

## Revendications

1. Toit escamotable pour véhicule, comprenant un élément de toit avant (2) rigide et un élément de toit arrière (3) rigide portant une lunette arrière (4), ces éléments avant (2) et arrière (3) étant déplaçables entre une position dans laquelle ces éléments (2, 3) s'étendent au-dessus de l'habitacle (5) du véhicule et une position dans laquelle ces éléments (2, 3) sont repliés l'un sur l'autre dans le coffre arrière (6) du véhicule, l'élément avant (2) étant fixé de façon articulée à l'élément arrière (3) suivant un premier axe (7) compris entre les bords adjacents des deux éléments (2, 3) et situé sensiblement dans le prolongement de leur surface inférieure (2b, 3b), l'élément arrière (3) étant fixé de façon articulée à la carrosserie suivant un deuxième axe (8) proche du bord arrière inférieur de cet élément arrière (3), le déplacement des deux éléments de toit (2, 3) entre les deux positions précitées étant commandé par un bras de commande pivotant (10) dont l'extrémité avant est fixée de façon articulée à l'élément avant (2) suivant un troisième axe (11) situé en avant du premier axe (7), l'extrémité arrière dudit bras de commande (10) étant fixée de façon articulée à la carrosserie suivant un quatrième axe (12) situé en avant du deuxième axe (8), **caractérisé en ce que** les quatre axes précités (7, 8, 11, 12) définissent un quadrilatère déformable, et **en ce que** la lunette arrière (4) est déplaçable entre une première position sensiblement horizontale lorsque le toit est fermé, une deuxième position sensiblement verticale, rabattue vers l'habitacle (5), et une troisième position sous l'élément avant (2) lorsque le toit est rangé dans le coffre arrière (6).

2. Toit conforme à la revendication 1, **caractérisé en ce que** le pivotement dudit bras (10) est commandé par des moyens permettant à ce bras (10) de basculer vers l'arrière suivant un angle proche de 180°.

3. Toit conforme à l'une des revendications 1 ou 2, **caractérisé en ce que** en position de rangement dans le coffre arrière (6), l'élément avant (2) s'étend sensiblement horizontalement au-dessus de l'élément arrière (3), ce dernier étant replié sous l'élément avant (2) par rotation suivant un angle proche de 180° autour dudit premier axe (7).

4. Toit conforme à l'une des revendications 1 à 3, **caractérisé en ce que** la lunette arrière (4) est associée à des moyens permettant de déplacer cette lunette entre une position dans laquelle elle recouvre une partie de la surface extérieure de l'élément arrière (3), et une position rangée dans le coffre arrière (6) dans laquelle cette lunette (4) s'étend entre l'élément avant (2) et l'élément arrière (3).

5. Toit conforme à la revendication 4, **caractérisé en ce que** lesdits moyens comprennent un levier pivotant (13) dont une extrémité est fixée de façon articulée à la lunette (4) suivant un axe (14) s'étendant sous cette lunette (4) et dont l'autre extrémité est montée pivotante suivant un axe (15) fixé au châssis proche dudit deuxième axe (8).

6. Toit conforme à la revendication 4, **caractérisé en ce que** lesdits moyens comprennent un levier pivotant (16) dont une extrémité est fixée de façon articulée à la lunette (4) suivant un axe (17) s'étendant sous cette lunette (4) et dont l'autre extrémité est montée pivotante suivant un axe (18) solidaire du bras pivotant (10), le bord avant (4a) de la lunette (4) étant articulé au bord arrière (2a) de l'élément avant (2).

7. Toit conforme à la revendication 4, **caractérisé en ce que** le bord avant (4a) de la lunette (4) est articulé en (19) au bord arrière (2a) de l'élément avant (2), l'axe d'articulation (7) de l'élément arrière (3) à l'élément avant (2) portant un pignon (20) engrené avec un pignon fou (21), lui-même engrené avec un pignon (22) solidaire de l'axe d'articulation (19) de la lunette (4) avec l'élément avant (2).

8. Toit conforme à la revendication 7, **caractérisé en ce que** la lunette (4) comporte un verrou (23) apte à verrouiller cette lunette (4) à son axe d'articulation (19) à l'élément avant (2).

9. Véhicule équipé d'un toit escamotable conforme à l'une des revendications 1 à 8, ce véhicule (1) étant du type pick-up comprenant une cabine avant(5) et une benne arrière (6), cette cabine (5) comportant des sièges avant (24) et une banquette arrière rabattable, le toit (2, 3) étant déplaçable entre les positions suivantes :
- une première position dans laquelle les éléments arrière (3) et avant (2) recouvrent entièrement la cabine avant (5), celle-ci pouvant alors abriter des passagers à l'avant et à l'arrière,
- une deuxième position dans laquelle les éléments arrière (3) et avant (2) sont rangés dans la benne arrière (6), la cabine (5) avant étant alors totalement découverte,
- une troisième position dans laquelle la banquette arrière (25) est rabattue vers l'avant dans le prolongement du plancher (26) de la benne arrière (6) pour allonger celle-ci, et l'élément avant (2) recouvre la partie avant de la cabine(5), l'élément arrière (3) est rangé sur la benne arrière (6), la lunette (4) de l'élément arrière (3) est rabattue vers le bas et vers les sièges avant (24) pour fermer l'arrière de la cabine(5).

## Claims

1. Retractable roof for a vehicle, comprising a rigid front roof element (2) and a rigid rear roof element (3) containing a rear window (4), these front (2) and rear (3) elements being able to move between a position in which the elements (2, 3) extend over the passenger compartment (5) of the vehicle and a position in which these elements (2, 3) are folded on top of each other in the rear trunk (6) of the vehicle, the front element (2) being fixed in a hinged manner to the rear element (3) according to a first axis (7) comprised between the adjacent edges of the two elements (2, 3) and located approximately in the extension of their bottom surface (2b, 3b), the rear element (3) being fixed in a hinged manner to the body according to a second axis (8) next to the rear lower edge of this rear element (3), the movement of the two roof elements (2, 3) between the two aforementioned positions being controlled by a pivoting control arm (10), the front end of which is fixed in a hinged manner to the front element (2) according to a third axis (11) located in front of the first axis (7), the rear end of said control arm (10) being fixed in a hinged manner to the body according to a fourth axis (12), located in front of the second axis (8), **characterised in that** the four aforementioned axes (7, 8, 11, 12) define a deformable quadrilateral, and **in that** the rear window (4) can move between a first approximately horizontal position when the roof is closed, a second approximately vertical position, folded towards the passenger compartment (5) and a third position under the front element (2) when the roof is stored in the rear trunk (6).

2. Roof according to claim 1, **characterised in that** the pivoting of said arm (10) is controlled by means that allow this arm (10) to swing towards the rear by an angle of almost 180°.

3. Roof according to one of the claims 1 or 2, **characterised in that**, in the storage position in the rear trunk (6), the front element (2) extends approximately horizontally above the rear element (3), the latter being folded under the front element (2) by rotation according to an angle of almost 180° around said first axis (7).

4. Roof according to one of the claims from 1 to 3, **characterised in that** the rear window (4) is attached to means that make it possible to move this rear window between a position in which it covers a part of the outer surface of the rear element (3) and a stored position in the rear trunk (6) in which this rear window (4) extends between the front element (2) and the rear element (3).

5. Roof according to claim 4, **characterised in that** said means comprise a pivoting lever (13), in which one end is fixed in a hinged manner to the rear window (4) according to an axis (14) that extends under this rear window (4), and in which the other end is mounted so as to pivot according to an axis (15) fixed to the chassis near said second axis (18).

6. Roof according to claim 4, **characterised in that** said means comprise a pivoting lever (16) in which one end is fixed in a hinged manner to the rear window (4) according to an axis (17) that extends under this rear window (4), and in which the other end is mounted to as to pivot according to an axis (18) solidly attached to the pivoting arm (10), the front edge (4a) of the rear window (4) being hinged to the rear edge (2a) of the front element (2).

7. Roof according to claim 4, **characterised in that** the front edge (4a) of the rear window (4) is hinged by (19) to the rear edge (2a) of the front element (2), the axis (7) that hinges the rear element (3) to the front element (2) being provided with a cogwheel (22) solidly attached to the axis (19) that hinges the rear window (4) to the front element (2).

8. Roof according to claim 7, **characterised in that** the rear window (4) comprises a lock (23) that can lock this rear window (4) to the axis (19) that hinges it to the front element (2).

9. Vehicle equipped with a retractable roof according to any one of the claims from 1 to 8, this vehicle (1) being of the pick-up type comprising a front cabin (5) and a rear loading platform (6), this cabin (5) comprising front seats (24) and a foldable rear bench seat, the roof (2, 3) being able to move between the following positions:
- a first position in which the rear (3) and front (2) elements completely cover the front cabin (5), which can then provide shelter for the front and rear passengers,
- a second position in which the rear (3) and front (2) elements are stored in the rear loading platform (6), leaving the front cabin (5) completely uncovered,
- a third position in which the rear bench seat (25) is folded forwards as an extension of the floor (26) of the rear loading platform (6), and the front element (2) covers the front part of the cabin (5), the rear element (3) is stored on the rear loading platform (6) and the rear window (4) of the rear element (3) is folded downwards and towards the front seats (24) so as to close off the rear of the cabin (5).

## Patentansprüche

1. Faltbares Dach für ein Fahrzeug mit einem steifen vorderen Dachelement (2) und einem steifen hinteren Dachelement (3) mit einer Heckscheibe (4), wobei diese vorderen (2) und hinteren (3) Elemente zwischen einer Position verschiebbar sind, in der diese Elemente (2, 3) sich oberhalb der Fahrerkabine (5) des Fahrzeugs und einer Position erstrecken, in der diese Elemente (2, 3) aufeinander im hinteren Kofferraum (6) des Fahrzeugs gefaltet sind, wobei das vordere Element (2) artikuliert am hinteren Element (3) gemäß einer zwischen den anliegenden Rändern der zwei Elemente (2, 3) inbegriffenen und sich deutlich in der Verlängerung ihrer inneren Fläche (2b, 3b) befindenden ersten Achse (7) befestigt ist, wobei das hintere Element (3) artikuliert gemäß einer zweiten Achse (8) nahe des hinteren unteren Randes dieses hinteren Elements (3) an der Karosserie befestigt ist, wobei die Verschiebung der beiden Dachelemente (2, 3) zwischen den beiden vorgenannten Positionen durch einen schwenkbaren Steuerarm (10) gesteuert wird, dessen vorderes Ende artikuliert gemäß einer sich vor der ersten Achse (7) befindenden dritten Achse (11) am vorderen Element (2) befestigt ist, wobei das hintere Ende des genannten Steuerarms (10) artikuliert gemäß einer sich vor der zweiten Achse (8) befindenden vierten Achse (12) an der Karosserie befestigt ist, **dadurch gekennzeichnet, dass** die vier vorgenannten Achsen (7, 8, 11, 12) ein verformbares Viereck definieren und dass die Heckscheibe (4) zwischen einer ersten, wenn das Dach geschlossen ist, deutlich horizontalen Position und einer zweiten, deutlich vertikalen, zur Fahrerkabine (5) eingeklappten Position und einer dritten Position, wenn das Dach im hinteren Kofferraum (6) untergebracht ist, unter dem vorderen Element (2) verschiebbar ist.

2. Dach gemäß Anspruch 1, **dadurch gekennzeichnet, dass** das Schwenken des genannten Arms (10) durch diesem Arm das Klappen nach hinten gemäß einem Winkel von rund 180° erlaubende Mittel gesteuert wird.

3. Dach gemäß Anspruch 1 oder 2, **dadurch gekennzeichnet, dass** das vordere Element (2) sich in eingefahrener Position im hinteren Kofferraum (6) befindet, sich das vordere Element (2) deutlich horizontal oberhalb des hinteren Elements (3) erstreckt, wobei dieses unter dem vorderen Element (2) durch Rotation gemäß einem Winkel von rund 180° um die genannte erste Achse (7) gefaltet ist.

4. Dach gemäß Anspruch 1 bis 3, **dadurch gekennzeichnet, dass** die genannte Heckscheibe (4) einem der die Verschiebung dieser Heckscheibe zwischen einer Position, in der sie einen Teil der äußeren Fläche des hinteren Elements (3) abdeckt, und einer eingefahrenen Position im hinteren Kofferraum (6), in der sich diese Heckscheibe (4) zwischen dem vorderen Element (2) und dem hinteren Element (3) erstreckt, erlaubenden Mittel zugeordnet ist.

5. Dach gemäß Anspruch 4, **dadurch gekennzeichnet, dass** die genannten Mittel einen schwenkbaren Hebel (13) umfassen, dessen eines Ende artikuliert gemäß einer sich unter dieser Heckscheiben (4) erstreckenden Achse (14) an der Heckscheibe (4) befestigt ist und dessen anderes Ende schwenkbar gemäß einer am Rahmen nahe der genannten zweiten Achse (8) befestigten Achse (15) angebracht ist.

6. Dach gemäß Anspruch 4, **dadurch gekennzeichnet, dass** die genannten Mittel einen schwenkbaren Hebel (16) umfassen, dessen eines Ende artikuliert gemäß einer sich unter dieser Heckscheibe (4) erstreckenden Achse (17) an der Heckscheibe (4) befestigt ist und dessen anderes Ende schwenkbar gemäß einer an dem schwenkbaren Arm (1) fest befestigten Achse (18) angebracht ist, wobei der vordere Rand (4a) der Heckscheibe (4) am hinteren Rand (2a) des vorderen Elements (2) artikuliert ist.

7. Dach gemäß Anspruch 4, **dadurch gekennzeichnet, dass** der vordere Rand (4a) der Heckscheibe (4) an (19) am hinteren Rand (2a) des vorderen Elements (2) artikuliert ist, wobei die Artikulationsachse (7) des hinteren Elements (3) am vorderen Element (2) ein in ein freies Ritzel (21) eingreifendes Ritzel (20) trägt, das wiederum in ein mit der Artikulationsachse (19) der Heckscheibe (4) mit dem vorderen Element (2) fest verbundenes Ritzel (22) eingreift.

8. Dach gemäß Anspruch 7, **dadurch gekennzeichnet, dass** die Heckscheibe (4) einen zur Verriegelung dieser Heckscheibe (4) an ihrer Artikulationsachse (19) am vorderen Element (2) geeigneten Riegel (23) umfasst.

9. Mit einem faltbaren Dach gemäß Anspruch 1 bis 8 ausgerüstetes Fahrzeug, wobei dieses Fahrzeug (1) vom Typ Pick-Up mit einer vorderen Kabine (5) und einem hinteren Wagenkasten (6) ist, wobei diese Kabine (5) Vordersitze (24) und eine klappbare Rückbank umfasst, wobei das Dach (2, 3) zwischen den folgenden Positionen verschiebbar ist:
- einer ersten Position, in der die hinteren (3) und vorderen (2) Elemente die vordere Kabine (5) vollständig abdecken, wobei diese dann Fahrgäste vorne und hinten aufnehmen kann,
- eine zweite Position, in der die hinteren (3) und vorderen (2) Elemente im hinteren Wagenkasten (6) untergebracht sind, wobei die vordere Kabine (5) dann vollständig offen ist,
- eine dritte Position, in der die Rückbank (25) nach vorn in die Verlängerung des Fußbodens (26) des hinteren Wagenkastens (6) umgeklappt ist, um diesen zu verlängern, und das vordere Element (2) den vorderen Teil der Kabine (5) abdeckt, das hintere Element (3) auf dem hinteren Wagenkasten (6) untergebracht ist, die Heckscheibe (4) des hinteren Elements (3) nach unten und zu den Vordersitzen (24) umgeklappt ist, um den hinteren Teil der Kabine (5) zu schließen.
